Europäisches Patentamt

European Patent Office

Office européen des brevets

(19)

(11) Publication number: **0 250 702 B1**

## EUROPEAN PATENT SPECIFICATION

(12)

(45) Date of publication of patent specification: 25.08.93  (51) Int. Cl.⁵: **G06F 12/12**, G06F 12/08

(21) Application number: **87101299.3**

(22) Date of filing: **30.01.87**

(54) **Cache memory with variable fetch and replacement schemes.**

(30) Priority: **27.06.86 US 879649**

(43) Date of publication of application:
**07.01.88 Bulletin 88/01**

(45) Publication of the grant of the patent:
**25.08.93 Bulletin 93/34**

(84) Designated Contracting States:
**DE FR GB**

(56) References cited:
**US-A- 3 898 624**
**US-A- 4 530 055**

(73) Proprietor: **Hewlett-Packard Company
Mail Stop 20 B-O, 3000 Hanover Street
Palo Alto, California 94304(US)**

(72) Inventor: **Baum, Allen
2310 Cornell Street
Palo Alto, CA. 84306(US)**
Inventor: **Bryg, William R.
18630 Perego Way
Saratoga, CA. 95070(US)**
Inventor: **Mahon, Michael J.
1975 Adele Place
San Jose CA. 95125(US)**
Inventor: **Lee, Ruby Bei-Loh
10382 Heney Creek Place
Cupertino, CA. 95014(US)**
Inventor: **Muchnick, Steve S.
5007 Diamond Heights Blvd.
San Francisco, CA. 94131(US)**

(74) Representative: **Liesegang, Roland, Dr.-Ing. et al
FORRESTER & BOEHMERT Franz-
Joseph-Strasse 38
D-80801 München (DE)**

EP 0 250 702 B1

## Description

### Field of the Invention

The present invention relates to computer systems and, more particularly, to a computer system which utilizes a cache memory which can switch from a standard replacement scheme to a more efficient method of data replacement when warranted.

### Background of the Invention

Most modern computer systems include a central processing unit (CPU) and a main memory. The speed at which the CPU can decode and execute instructions to process data has for some time exceeded the speed at which instructions and operands can be transferred from main memory to the CPU. In an attempt to reduce the problems caused by this mismatch, many computer systems include a cache memory or buffer between the CPU and main memory.

A cache memory is a small, high-speed buffer memory which is used to hold temporarily those portions of the contents of main memory which it is believed will be used in the near future by the CPU. The main purpose of a cache memory is to shorten the time necessary to perform memory accesses, either for data or instruction fetch. The information located in cache memory may be accessed in much less time than that located in main memory. Thus, a CPU with a cache memory needs to spend far less time waiting for instructions and operands to be fetched and/or stored. For example, in typical large, high-speed computers, main memory can be accessed in 300 to 600 nanoseconds; information can be obtained from a cache memory on the other hand, in 50 to 100 nanoseconds. For such machines, the cache memory produces a very substantial increase in execution speed, but processor performance is still limited in instruction execution rate by cache memory access time. Additional increases in instruction execution rate can be gained by further decreasing the cache memory access time.

A cache memory is made up of many blocks of one or more words of data. Each block has associated with it an address tag that uniquely identifies which block of main memory it is a copy of. Each time the processor makes a memory reference, the cache makes an address tag comparison to see if it has a copy of the requested data. If it does, it supplies the data. If it does not, it retrieves the block from main memory to replace one of the blocks stored in the cache, then supplies the data to the processor.

Optimizing the design of a cache memory generally has four aspects:

(1) Maximizing the probability of finding a memory reference's information in the cache (the so-called "hit" ratio),

(2) minimizing the time required to access information that is indeed in the cache (access time),

(3) minimizing the delay due to a cache "miss", and

(4) minimizing the overhead of updating main memory and maintaining multicache consistency.

All of these objectives must be accomplished under cost constraints and in view of the interrelationship between the parameters, for example, the trade-off between "hit" ratio and access time.

It is obvious that the larger the cache memory, the higher the probability of finding the needed information in it. Cache sizes cannot be expanded without limit, however, for several reasons: cost, the most important reason in many machines, especially small ones; physical size, the cache must fit on the boards and in the cabinets; and access time, the larger the cache, the slower it will become.

Information is generally retrieved from cache associatively to determine if there is a "hit". However, large associative memories are both very expensive and somewhat slow. In early cache memories, all the elements were searched associatively for each request by the CPU. In order to provide the access time required to keep up with the CPU, cache sizes was limited and the hit ratio was thus rather low.

More recently, cache memories have been organized into groups of smaller associative memories called sets. Each set contains a number of locations, referred to as the set size. For a cache of size m, divided into L sets, there are $s = m/L$ locations in each set. When an address in main memory is mapped into the cache, it can appear in any of the L sets. For a cache of a given size, searching each of the sets in parallel can improve access time by a factor of L. However, the time to complete the required associative search is still undesirably lengthy.

The US-A-3,898,624 discloses a data processing system using a high speed buffer to interface a main storage with the CPU, the buffer storage comprising two addressable locations and an operating state register (OSR). Since the buffer storage is smaller than the main storage a variable algorithm for prefetching the next sequential line from the main storage and replacement of existing lines in the buffer is employed in accordance with the OSR which is loaded from the console during supervision mode.

The operation of cache memories to date has been based upon the assumption that, because a particular memory location has been referenced, hat location and locations very close to it are very likely to be accessed in the near future. This is often referred to as the property of locality.

The property of locality has two aspects, temporal and spatial. While over short periods of time, a program distributes its memory references nonuniformly over its address space, the portions of the address space which are favored remain largely the same for long periods of time. This first property, called temporal locality, or locality by time, means that the information which will be in sue in the near future is likely to be in use already. This type of behavior can be expected from certain data structures, such as program loops, in which both data and instructions are reused. The second property, locality by space, means that portions of the address space which are in use generally consist of a fairly small number of individually contiguous segments of that address space. Locality by space, then, means that the loci of reference of the program in the near future are likely to be near the current loci of reference. This type of behavior can be expected from common knowledge of program structure: related data items (variables, arrays) are usually stored together, and instruction are mostly executed sequentially. Since the cache memory retains segments of information that have been recently used, the property of locality implies that needed information is also likely to be found in the cache. See, Smith, A. J., Cache Memories, ACM Computing Surveys, 14:3 (Sept. 1982), pp. 473-530.

If a cache has more than one set, as described above, then when there is a cache miss, the cache must decide which of several blocks of information should be swapped out to make room for the new block being retrieved from main memory. To decide when a block will be swapped out, different caches use different replacement schemes.

The most commonly utilized replacement scheme is Least Recently Used ("LRU"). According to the LRU replacement scheme, for each group of blocks at a particular index, the cache mantains several status bits that keep track of the order in which these blocks were last accessed. Each time one of the blocks is accessed, it is marked most recently used and the others are adjusted accordingly. When there is a cache miss, the block swapped out to make room for the block being retrieved from main memory is the block that was least recently used.

Other replacement schemes that are used are First In First Out (FIFO) and random replacement, the nomenclature being self-explanatory.

Contrary to the above-stated assumption, however, not all computer data structures have the same kind of data locality. For some simple structures, such as data stacks or sequential data, an LRU replacement scheme is not optimal. Thus, in cache memory structures used in the past and in accordance with the basic assumption that the most likely data to be referenced is that which was referenced most recently or is close to that data in physical address, no provision has been made in cache memory operation for deviation from the standard data replacement scheme.

SUMMARY

It is an object of the present invention to minimize access time to a cache memory.

It is also an object of the invention to provide flexibility in cache memory operation so that the cache can switch from a standard replacement scheme to a more efficient method of data replacement when warranted.

These and other objects of the invention are accomplished by including a cache control specifier in each instruction that is presented to the cache memory. When presented with a store or load instruction, the cache identifies the cache control specifier in the instruction and implements one of a number of replacement schemes as indicated by the cache control specifier.

By embedding the cache control specifier in the instruction, the cache can treat stack or sequential data structures appropriately, therby increasing cache performance. The cache can also receive "hints" as to when it is advantageous to prefetch data from main memory.

Brief Description of the Drawings

Figure 1 is a schematic block diagram of a computer system which includes a cache memory;
Figure 2 is a schematic illustration of a multiple-set cache memory structure;
Figure 3 is a schematic block diagram illustrating the operation of a two-set cache in accordance with the method of the present invention; and
Figure 4 is a schematic illustration of a stacked data structure which can be utilized in conjunction with the method of the present invention.

Detailed Description of the Invention

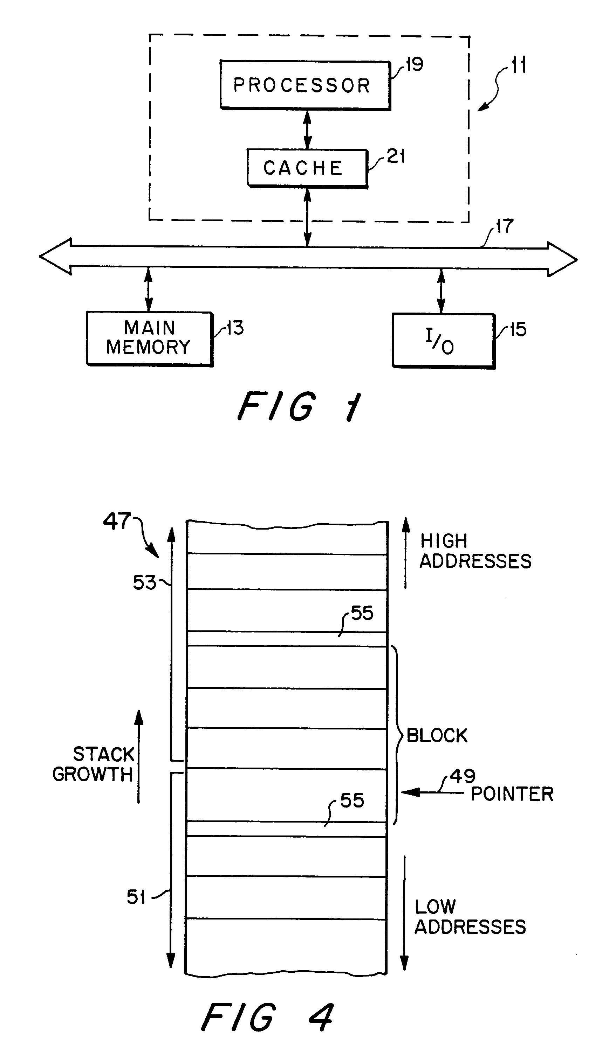

Figure 1 shows a computer system which incorporates a cache memroy. A CPU 11 communicates with main memory 13 and input/output channel 15 via bus 17. The CPU includes a processor 19 which fetches, decodes and executes instructions to process data. Since, as discussed above, it is not practical to store all the instructions and data used by the computer system in CPU 11, data and instructions are stored in main memory 13, transferred to processor 19 when they are requested during the execution of a program or routine and returned to main memory 13 after the program or routine has been completed.

Access to main memory 13 is relatively slow compared with the operation of processor 19. IF processor 19 had to wait for main memory access to be completed each time an instruction or data was needed, its execution rate would be significantly reduced. Thereore, in order to provide access times which more closely match the needs of the processor 19, a buffer memory, cache memory 21, stores a limited number of instructions and data.

Since cache memory 21 is much smaller than main memory 13, it can be economically built to have higher access rates. Nevertheless, there is still a trade-off between the access time for the cache and the size of the cache. As discussed above, as the cache becomes larger it becomes more expensive and the access time for the cache increases. Thus, if cache 21 is made very large to increase the hit ratio, although there will be very few references to main memory, the processor may be slowed down by increases access time, even for a cache "hit". It is therefore desirable to maximize the hit ratio for a cache of a given size and architecture.

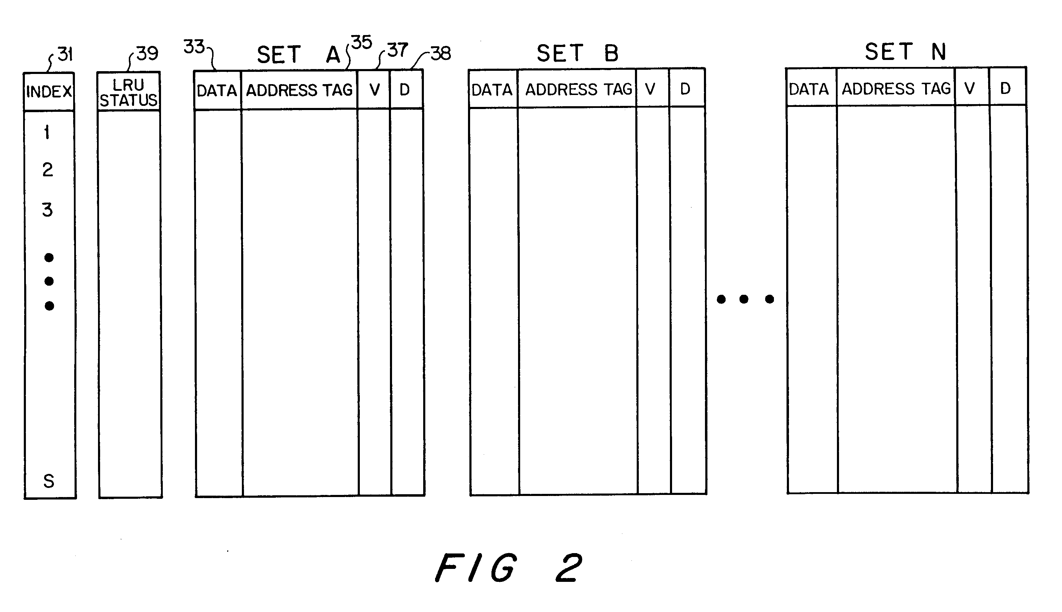

To explain the method of the invention more completely, an understanding of the structure of cache memory 21 is necessary. Figure 2 shows a cache memory having multiple sets A-N. Each set comprises an array of locations or blocks which are labeled with an index 31. Each block contains data 33 and an address tag 35 which corresponds to the address of the copy of the same data in main memory 13. In the preferred embodiment, each block of data 33 contains four words. This four-word block is the unit in which data is exchanged between cache memory 21 and the main memory 13, and it is also the unit in which data is indexed, fetched and replaced in cache 21. The block could contain fewer or more words. These parameters are a matter of design choice for the memory system, and the principles of the invention can be applied to a wide range of possible configurations. In addition to the data 33 and address tag 35, each block in the cache has associated with it wo one-bit status flags: "valid" and "dirty". The cache also has a group of LRU status bits for all blocks in the cache corresponding to the same index.

The valid bit 37 is set if and only if that block contains "valid", i.e., up-to-date, data.

The dirty bit 38 is set if the processor 19 has stored to that address in the cache emory since it was brought into he cache. Unless the cache 21 updates main memory 13 every time processor 19 does a stored to the cache, the cache will have more up-to-date data for a block than main memory has for the same block address. The dirty bit 38 indicates that main memory 13 must be updated by writing the data currently in the block in cache 21 back into main memory when that block is swapped out of the cache.

The LRU status bits 39 identify whether a block is the least recently used or most eligible for replacement. As stated above, according to the LRU replacement scheme, each time one of the blocks in the cache is accessed, it is marked most recently used and the LRU status bits of the others are adjusted accordingly.

Each time processor 19 makes a memory reference, cache 21 is searched to see if it contains a copy of the requested data. If it does not, then the data must be fetched in a block from main memory 13, supplied to processor 19 and stored in cache 21 replacing one of the blocks already there. If the replaced block is "dirty" that is, processor 19 has stored the block in the cache 21, then it must be written back to the appropriate address in main memory 13 to update main memory, thereby maintaining data integrity.

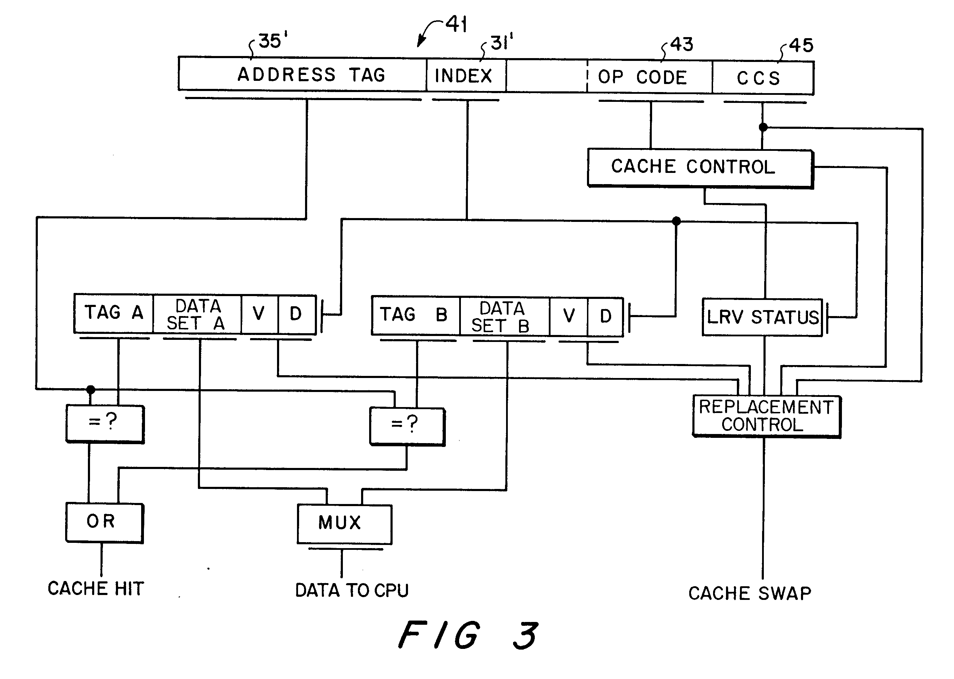

According to the present invention, as shown in Figure 3, the instruction executed by processor 19, which gives rise to the data request the cache 21 must handle, includes a number of bits which comprise a cache control specifier. The cache control specifier is coded to iform the cache about the type of data referenced by the instruction and, thus, which one of a plurality of replacement schemes should be used to swap data out of cache 21.

The instruction 41 provided by the processor 19 includes information from which may be computed an address tag $35'$ (which is used for searching the cache 21 for a corresponding tag 35), and index $31'$ (which is used to identify the desired index 31 in cache 21), an operational code field 43 (which is used to control the operation at the cache 21), and a cache control specifier 45 which specifies the method to be used in swapping data from the cache.

In the preferred embodiment of the invention, the instruction can code four such cache specifiers: NORMAL data, STACK data, SEQUENTIAL data and PREFETCH. The cache response to these specifiers to choose the replacement scheme which is best suited to the type of data identified.

For NORMAL data, a NORMAL cache control specifier is used adn the cache operates according to the standard replacement scheme, in this case,

LRU. Other standard replacement schemes that could be used are First-In-First-Out (FIFO) and random replacement.

A STACK cache control specifier is used for stacked data structures that grow from low numbered addresses in memory. An example is the Last-in-First-Out (LIFO) stack structure 47 illustrated in Figure 4. As shown in Figure 4, a stack pointer 49 keeps track of the address of the top of the stack. The data at addresses below pointer 49, in the area 51, is valid data; data at addresses above pointer 49, in area 53, is invalid. The processor 19 is allowed to access any data currently considered valid, i.e., below stack pointer 49. The addresses in the stack 47 are mapped onto the indexed locations 31 in cache 21, and can be divided into blocks corresponding to the blocks in cache 21, as indicated by the double line divisions 55 shown in Figure 4.

If the reference to the stack 47 is a STORE to the first word in a block and there is a cache "miss", then a new block must be allocated on the stack and in the cache. It is assumed that new data will be written into the selected block before the old data is read. Therefore, there is no need, in thise case, to retrieve data from main memory. The cache initializes the address tag, marks the block most recently used and performs the STORE. In addition, to prevent possible security violations, the block is initialized with constant or random data before performing the store.

If the reference to the stack 40 is a LOAD to the first word in a block, then room is being deallocated on the stack and it is assumed that the data in the block is no longer needed. The cache 21, therefore, performs a normal LOAD and marks the block clean andmost eligible for replacement, i.e., least recently used.

Using the STACK variation of the standard replacement scheme avoids transferring invalid stack data into the cache and, thus, saves not only the time required to transfer the data to the cache in the first place, but also the time required to remove it from the cache and initialize the addresses later on.

The SEQUENTIAL cache control specifier is used for sequential data access patterns such as htose involved in block move or in scanning text. When a LOAD or a STORE operation references the last address in a block, it is assumed that it will be the last reference to that block for a long time. Therefore, the cache performs the normal LOAD or STORE and the block is marked most eligible for replacement. If a STORE accesses the first word in a block and there is a cache "miss", it can be assumed that the whole block will be overwritten and there is no need to read from main memory 13. Instead, a block is freed up in the cache, initialized for security and marked most recently used, valid and dirty (similar to STACK store). The operating system must make sure that no other data shares the last block of the sequential dta structure, or this procedure can result in the loss of that data.

The PREFETCH cache control specifier is used to indicate that, in a LOAD or STORE to a block, the next block is very likely to be accessed in the near future. The cache therefore performs a normal LOAD or STORE and fetches the next block if it is not already in the cache. Depending on how the cache is designed, the prefetch might occur near the beginning, middle or end of the block with the specifier.

**Claims**

1. A method for replacing a data block in a cache memory of a computer system wherein the computer system comprises a processor for fetching and executing data, a main memory, and the cache memory, the method comprising the steps of:
   selecting one of a plurality of replacement schemes for swapping a data block from the cache memory and swapping the data block from the cache memory in accordance with said selected replacement scheme
   **characterized** in that
   an instruction is presented from the processor, said instruction including a cache control specifier indicative of a type of data structure included in the cache memory; and
   said cache control specifier is also indicative of said selected replacement scheme for swapping a data block from the cache memory.

2. A method as recited in claim 1 wherein said cache control specifier indicates that a normal replacement scheme is LRU.

3. A method as recited in claim 2 wherein said normal replacement scheme is LRU.

4. A method as recited in one of claims 1 to 3 wherein said cache control specifier is indicative of a stacked data structure.

5. A method as recited in one of claims 1 to 3 wherein said cache control specifier is indicative of a sequential data structure.

6. A method as recited in one of the preceeding claims wherein said cache control specifier indicates that a new data block should be transferred from the main memory to the cache memory.

7. A method for replacing a data block in a cache memory as recited in claim 1, the data block being part of a stacked data structure and including a plurality of serially arranged words, **characterized** by the steps of:

searching the cache to determine whether a desired data block is contained in the cache;

if said instruction references a STORE to the first word in said data block and said data block is not contained in the cache, allocating a new data block in the cache, marking the new data block as least eligible for replacement, and performing the STORE to said new data block;

if said instruction references a LOAD to the first word in said data block, marking said data block as most eligible for replacement and performing the LOAD to said data block.

8. A method for replacing a data block in a cache memory as recited in claim 1, the data block being part of a sequential data structure, and including a plurality of serially arranged words, **characterized** by the steps of:

searching the cache to determine whether a desired data block is contained in the cache;

if said instruction references the last word in said data block, and said data block is contained in the cache, marking said data block most eligible for replacement;

if said instruction references a STORE to the first word in said data block and said data block is not contained in the cache, allocating a new data block in the cache, marking said new data block as least eligible for replacement, and performing the STORE to said new data block.

**Patentansprüche**

1. Verfahren zum Ersetzen eines Datenblocks in einem Cachespeicher eines Computersystems, bei dem das Computersystem einen Prozessor zum Abrufen und Steuern von Daten, einen Hauptspeicher und den Cachespeicher aufweist, mit den Verfahrensschritten:

Auswählen eines von mehreren Austauschschemata zum Umlagern des Datenblockes von dem Cachespeicher und Umlagern des Datenblockes von dem Cachespeicher nach Maßgabe des ausgewählten Austauschschemas,

dadurch **gekennzeichnet, daß**

ein Befehl vom Prozessor ausgegeben wird, der ein Cachespeicher-Steuerungs-Spezifikationselemnt umfaßt, welches eine in dem Cachespeicher vorliegende Datenstrukturart angibt, und

daß das Cachespeicher-Steuerungs-Spezifikationselement auch das ausgewählte Austauschschema zum Umlagern des Datenblockes von dem Cachespeicher angibt.

2. Verfahren nach Anspruch 1, bei dem das Cachespeicher-Spezifikationselement angibt, daß ein normales Austauschschema LRU ist.

3. Verfahren nach Anspruch 2, bei dem das normale Austauschschema LRU ist.

4. Verfahren nach einem der Ansprüche 1 bis 3, bei dem das Cachespeicher-Steuerungs-Spezifikationselement eine Stapeldatenstruktur angibt.

5. Verfahren nach einem der Ansprüche 1 bis 3, bei dem das Cachespeicher-Steuerungs-Spezifikationselement eine sequentielle Datenstruktur angibt.

6. Verfahren nach einem der vorangehenden Ansprüche, bei dem das Cachespeicher-Steuerungs-Spezifikationselement angibt, daß ein neuer Datenblock vom Hauptspeicher zum Cachespeicher übertragen werden soll.

7. Verfahren zum Ersetzen eines Datenblockes in einem Cachespeicher nach Anspruch 1, bei dem der Datenblock Teil einer Stapeldatenstruktur ist und mehrere seriell angeordnete Worte aufweist, **gekennzeichnet** durch die folgenden Verfahrensschritte:

Durchsuchen des Cachespeichers, um zu ermitteln, ob ein gewünschter Datenblock im Cachespeicher enthalten ist;

wenn ein Befehl den ersten Wort in dem Datenblock ein SPEICHERN zuordnet und der Datenblock nicht in dem Cachespeicher enthalten ist, Belegen eines neuen Datenblockes in dem Cachespeicher, Markieren des neuen Datenblockes als für einen Austausch am wenigsten in Frage kommend und Durchführen des SPEICHERN mit dem neuen Datenblock;

wenn der Befehl dem ersten Wort in dem Datenblock ein LADEN zuordnet, Markieren des Datenblocks als den für einen Austausch am meisten in Frage kommenden und Durchführen des LADEN mit dem Datenblock.

8. Verfahren zum Ersetzen eines Datenblockes in einem Cachespeicher nach Anspruch 1, bei dem der Datenblock Teil einer sequentiellen Datenstruktur ist und mehrere seriell angeordnete Worte aufweist, **gekennzeichnet** durch die folgenden Verfahrensschritte:

Durchsuchen des Cachespeichers, um zu ermitteln, ob ein gewünschter Datenblock in dem Cachespeicher enthalten ist; wenn sich der Befehl auf das letzte Wort im Datenblock bezieht und der Datenblock im Cachespeicher enthalten ist, Markieren des Datenblockes als für einen Austausch am meisten in Frage kommend; wenn der Befehl dem ersten Wort in dem Datenblock ein SPEICHERN zuordnet und der Datenblock nicht in dem Cachespeicher enthalten ist, Belegen eines neuen Datenblockes in dem Cachespeicher, Markieren des neuen Datenblockes als den für einen Austausch am wenigsten in Frage kommenden und Durchführen des SPEICHERN mit dem neuen Datenblock.

**Revendications**

1. Un procédé de remplacement d'un bloc de données dans une antémémoire d'un système formant ordinateur, qui comprend un processeur pour extraire et exécuter des données, d'une mémoire principale, et l'antémémoire, le procédé comprenant les étapes consistant à : sélectionner l'un de plusieurs schémas de remplacement pour transférer un bloc de données à partir de l'antémémoire et transférer le bloc de données à partir de l'antémémoire conformément audit schéma de remplacement sélectionné, caractérisé en ce qu'une instruction est présentée en provenance du processeur, ladite instruction contenant un spécificateur de commande d'antémémoire indiquant un type de structure de données qui est inclus dans l'antémémoire ; et ledit spécificateur de commande d'antémémoire indique également ledit schéma de remplacement sélectionné pour transférer un bloc de données à partir de l'antémémoire.

2. Un procédé tel que défini dans la revendication 1, dans lequel ledit spécificateur de commande d'antémémoire indique qu'un schéma de remplacement normal est du type "le moins récemment utilisé" (LRU).

3. Un procédé tel que défini dans la revendication 2, dans lequel ledit schéma de remplacement normal est du type "le moins récemment utilisé" (LRU).

4. Un procédé tel que défini dans une des revendications 1 à 3, dans lequel ledit spécificateur de commande d'antémémoire indique une structure de données empilées.

5. Un procédé tel que défini dans une des revendications 1 à 3, dans lequel ledit spécificateur de commande d'antémémoire indique une structure de données séquentielles.

6. Un procédé tel que défini dans une des revendications précédentes, dans lequel ledit spécificateur de commande d'antémémoire indique qu'un nouveau bloc de données devrait être transféré de la mémoire principale dans l'antémémoire.

7. Un procédé de remplacement d'un bloc de données dans une antémémoire tel que défini dans la revendication 1, le bloc de données faisant partie d'une structure de données empilées et comprenant une pluralité de mots disposés en série, caractérisé par les étapes consistant à :
   - faire une recherche dans l'antémémoire pour déterminer si un bloc de données désiré est contenu dans l'antémémoire ;
   - si ladite instruction fait référence à une MEMORISATION pour le premier mot contenu dans ledit bloc de données et si ledit bloc de données n'est pas contenu dans l'antémémoire, affecter un nouveau bloc de données à l'antémémoire, en repérant le nouveau bloc de données comme étant au moins acceptable pour un remplacement,et effectuer la MEMORISATION pour ledit nouveau bloc de données ;
   - si ladite instruction fait référence à un CHARGEMENT pour le premier mot se trouvant dans ledit bloc de données, repérer ledit bloc de données comme le plus acceptable pour un remplacement et effectuer le CHARGEMENT pour ledit bloc de données.

8. Un procédé de remplacement d'un bloc de données dans une antémémoire tel que défini dans la revendication 1, ledit bloc de données faisant partie d'une structure de données séquentielles, et contenant plusieurs mots disposés en série, caractérisé par les étapes consistant à :
   - faire une recherche dans l'antémémoire pour déterminer si un bloc de données désiré est contenu dans l'antémémoire ;
   - si ladite instruction fait référence au dernier mot dans ledit bloc de données et si ledit bloc de données est contenu dans l'antémémoire, repérer ledit bloc de données comme le plus acceptable pour un remplacement ;

- si ladite instruction fait référence à une MEMORISATION pour ledit premier mot se trouvant dans ledit bloc de données et si ledit bloc de données n'est pas contenu dans l'antémémoire, affecter un nouveau bloc de données à l'antémémoire, repérer ledit nouveau bloc de données comme le moins acceptable pour un remplacement, et effectuer la MEMORISATION pour ledit nouveau bloc de données.

FIG 1

FIG 4

FIG 2

FIG 3